# FASCICULE DE BREVET EUROPEEN

(11) **EP 3 986 723 B1**
(45) Date de publication et mention de la délivrance du brevet: **07.06.2023**
(21) Numéro de dépôt: 20785780.6
(22) Date de dépôt: 18.06.2020
(51) Int. Cl.: B60C 1/00, C08K 3/06, C08K 3/36

(54) **COMPOSITION DE CAOUTCHOUC**
KAUTSCHUKZUSAMMENSETZUNG
RUBBER COMPOSITION

(30) Priorité: 19.06.2019 FR 1906592
(43) Date de publication de la demande: 27.04.2022
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 Clermont-Ferrand Cedex 9 (FR); LETESSIER, Julien, 63040 Clermont-Ferrand Cedex 9 (FR)
(74) Mandataire: Gandon-Pain, Sylvie
(86) Numéro de dépôt international: PCT/FR2020/051063
(87) Numéro de publication internationale: WO 2020/254769

(56) Documents cités:
- WO-A1-2015/059271
- WO-A1-2018/115704
- WO-A1-2019/002756

## Description

La présente invention concerne le domaine des compositions de caoutchouc destinées à être utilisées dans des armatures de renforcement métallique, en particulier pour pneumatique.

Un pneumatique à armature de carcasse radiale, de manière connue, comporte une bande de roulement, deux bourrelets inextensibles, deux flancs reliant les bourrelets à la bande de roulement et une ceinture disposée circonférentiellement entre l'armature de carcasse et la bande de roulement, cette ceinture et l'armature de carcasse étant constituées de diverses nappes (ou "couches") de caoutchouc renforcées par des éléments de renforcement filaires ou renforts filaires tels que des câbles ou des monofilaments, par exemple métalliques. Une nappe de renforcement renforcée par des éléments filaires est constituée d'une gomme et d'éléments de renforcement qui sont noyés dans la gomme. Une telle gomme est également appelée mélange de calandrage. Elle comprend généralement un polyisoprène à fort taux de cis comme le caoutchouc naturel, une charge renforçante et un système de vulcanisation. Une nappe de renforcement est aussi appelée armature de renforcement. Une nappe de renforcement renforcée par des éléments filaires métallique est aussi appelée armature de renforcement métallique. La ceinture disposée circonférentiellement entre l'armature de carcasse et la bande de roulement est aussi appelée armature de sommet.

Pour remplir efficacement leur fonction de renforcement de ces nappes, soumises comme on le sait à des contraintes très importantes lors du roulage des pneumatiques, les éléments de renforcement filaires métalliques doivent satisfaire à un très grand nombre de critères techniques, parfois contradictoires, tels qu'une haute endurance en fatigue, une résistance élevée à la traction, à l'usure et à la corrosion, une forte adhésion au caoutchouc environnant, et être capables de maintenir ces performances à un niveau très élevé aussi longtemps que possible. On comprend aisément que l'adhésion entre la gomme et les éléments de renforcement filaires métalliques est donc une propriété clé pour la pérennité de ces performances. Par exemple, le procédé traditionnel pour relier la gomme à de l'acier consiste à revêtir la surface de l'acier avec du laiton (alliage cuivre-zinc), la liaison entre l'acier et la gomme étant assurée par la sulfuration du laiton lors de la vulcanisation ou cuisson de l'élastomère présent dans le mélange de calandrage. La qualité de la liaison entre le métal et la gomme dépend donc très fortement des conditions dans lesquelles se déroule la réaction de sulfuration. Les compositions de caoutchouc utilisées comme mélanges de calandrage sont donc riches en soufre, puisqu'une partie est consommée dans la réaction de vulcanisation de l'élastomère et une autre partie dans la réaction de sulfuration. Elles contiennent traditionnellement plus de 5 pce de soufre.

Lorsque la charge renforçante du mélange de calandrage est une silice comme cela est décrit par exemple dans le document WO 200433548, la diphénylguanidine est un des ingrédients traditionnellement utilisés dans les mélanges de calandrage. La diphénylguanidine est utilisée à titre d'agent de recouvrement de la silice afin de disperser de façon homogène la silice dans le polyisoprène et de bénéficier ainsi pleinement des propriétés de renforcement de la silice. Comme il est aussi préférable du point de vue de l'endurance du pneumatique que les pertes hystérétiques du mélange de calandrage soient les plus faibles, un taux élevé de diphénylguanidine ne serait que favorable pour augmenter le pouvoir renforçant de la silice dans la composition de caoutchouc et pour diminuer l'hystérèse de la composition de caoutchouc.

Mais la diphénylguanidine agit aussi comme activateur de la réaction de vulcanisation et perturbe donc la réaction de sulfuration du laiton qui participe à l'établissement des liaisons entre le mélange de calandrage et le métal. Ces effets de la diphénylguanidine se traduisent par une réduction de la sécurité au grillage (« scorch time » en anglais) du mélange de calandrage et une diminution des forces d'adhésion entre le mélange de calandrage et l'élément de renforcement métallique. Or une réduction de la sécurité au grillage conduit à des cuissons prématurées des compositions de caoutchouc et donc à des difficultés dans la fabrication des semi-finis crus, et par suite à une diminution de la performance industrielle dans la fabrication d'un pneumatique. Les forces d'adhésion étant un paramètre clef dans la pérennité des performances d'un pneumatique, leur diminution pourrait entraîner une diminution de l'endurance du pneumatique.

Compte-tenu des effets antinomiques de la diphénylguanidine, l'homme du métier se trouve devant un problème à résoudre qui est de trouver une solution pour améliorer le compromis de performances que sont l'endurance du pneumatique et la performance industrielle.

La Demanderesse a découvert de façon surprenante une composition de caoutchouc qui permet de résoudre les problèmes mentionnés.

Ainsi, un premier objet de l'invention est une composition de caoutchouc qui comprend un élastomère fonctionnel, une charge renforçante et un système de vulcanisation qui comprend plus de 5 pce de soufre, l'élastomère fonctionnel étant un polyisoprène qui comprend des unités isoprène sous la configuration 1,4-cis et des groupes pendants imidazole de formule (I) 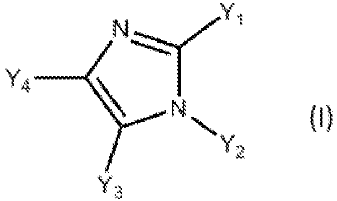 dans laquelle Y₁ désigne un atome d'hydrogène ou un alkyle, Y₂ désigne un rattachement à une unité isoprène de l'élastomère fonctionnel, Y₃ et Y₄, identiques ou différents, représentent un atome d'hydrogène, un alkyle ou forment ensemble avec les atomes de carbone auxquels ils se rattachent un cycle, les unités isoprène sous la configuration 1,4-cis représentant au moins 90% en mole des unités isoprène de l'élastomère fonctionnel, la charge renforçante comprenant plus de 50% en masse d'une silice.

Un deuxième objet de l'invention est une armature de renforcement comportant un mélange de calandrage et des éléments de renforcement métalliques enrobés dans le mélange de calandrage, lequel mélange de calandrage est une composition de caoutchouc conforme à l'invention.

Un troisième objet est un pneumatique comprenant une composition de caoutchouc conforme à l'invention ou une armature de renforcement conforme à l'invention.

### Description détaillée

L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

L'élastomère fonctionnel utile aux besoins de l'invention est un polyisoprène, dit polyisoprène à fort taux de cis. L'élastomère fonctionnel a la particularité d'avoir des unités isoprène sous la configuration 1,4 cis. Ces unités isoprène sous la configuration 1,4-cis sont bien connues de l'homme du métier : elles résultent d'une insertion particulière de l'isoprène dans la chaîne polymère en croissance au cours de la réaction de polymérisation. Les unités isoprène sous la configuration 1,4 cis, également appelées unités 1,4-cis, représentent au moins 90% en mole des unités isoprène de l'élastomère fonctionnel. De préférence, les unités isoprène sous la configuration 1,4-cis représentent au moins 95% en mole des unités isoprène de l'élastomère fonctionnel.

L'élastomère fonctionnel utile aux besoins de l'invention a aussi pour autre particularité de porter des groupes fonctionnels. Les groupes fonctionnels sont des groupes pendants de formule (I).

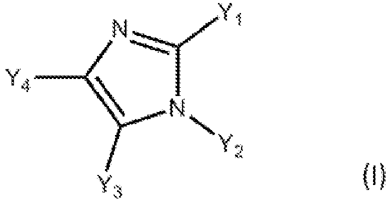

Dans la formule (I), Y₁ désigne un atome d'hydrogène ou un alkyle, Y₂ désigne un rattachement à une unité isoprène de l'élastomère fonctionnel, Y₃ et Y₄, identiques ou différents, représentent un atome d'hydrogène, un alkyle ou forment ensemble avec les atomes de carbone auxquels ils se rattachent un cycle.

L'homme du métier comprend que les groupes fonctionnels sont rattachés à l'élastomère par liaison covalente. Le rattachement à une unité diénique peut être direct ou indirect, c'est-à-dire par l'intermédiaire d'un groupe d'atomes. Il est de préférence indirect.

De préférence, les symboles Y₃ et Y₄ sont chacun un atome d'hydrogène. Selon un mode de réalisation préférentiel de l'invention, les symboles Y₃ et Y₄ sont chacun un atome d'hydrogène et le symbole Y₁ désigne un atome d'hydrogène ou un alkyle.

Lorsque le symbole Y₁ représente un groupe alkyle, le groupe alkyle est préférentiellement un alkyle en C₁-C₆, plus préférentiellement un méthyle. On entend par alkyle en C₁-C₆ un alkyle qui contient de 1 à 6 atomes de carbone.

Selon l'un quelconque des modes de réalisation de l'invention, les groupes pendants de formule (I) sont de préférence répartis de façon aléatoire le long de la chaîne élastomère.

La teneur molaire en groupes pendants de formule (I) dans l'élastomère fonctionnel est préférentiellement d'au plus 3% molaire pour minimiser le surcoût de l'élastomère fonctionnel par rapport à un élastomère non fonctionnel. Typiquement, l'élastomère fonctionnel contient plus de 0% à 3% en mole de groupes pendants imidazole. Par exemple, la teneur molaire en groupes pendants de formule (I) est de 0.02% à 3% en mole des unités de répétition constitutives de l'élastomère fonctionnel, préférentiellement de 0.1% à 3% en mole des unités de répétition constitutives de l'élastomère fonctionnel. Ces plages peuvent s'appliquer à l'un quelconque des modes de réalisation de l'invention.

Selon un mode de réalisation particulier de l'invention, l'élastomère fonctionnel peut être un mélange de plusieurs élastomères qui peuvent se différencier les uns des autres par leur microstructure et leur macrostructure. Chacun des élastomères composant le mélange répond à la définition de l'élastomère fonctionnel utile aux besoins de l'invention tant du point de vue de la stéréorégularité que de la fonctionnalisation. De préférence, l'élastomère fonctionnel est préférentiellement un caoutchouc naturel modifié, c'est-à-dire un caoutchouc naturel qui porte des fonctions imidazole de formule (I). Autrement dit, le polyisoprène à fort taux de cis est préférentiellement un caoutchouc naturel. De manière plus préférentielle, le polyisoprène à fort taux de cis est différent d'un caoutchouc naturel époxydé.

Selon un mode de réalisation particulièrement préférentiel de l'invention, l'élastomère fonctionnel est un polyisoprène dont une partie des unités isoprène sont modifiées par greffage d'un agent de modification qui contient un groupe réactif vis-à-vis de doubles liaisons carbone carbone et un groupe de formule (II) dans laquelle le symbole Z₁ désigne un atome d'hydrogène ou un alkyle, Z₂ désigne un rattachement au groupe réactif, Z₃ et Z₄, identiques ou différents, représentent un atome d'hydrogène, un alkyle ou forment ensemble avec les atomes de carbone auxquels ils se rattachent un cycle.

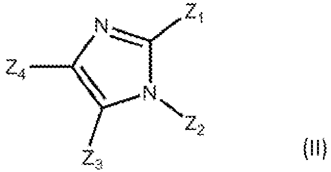

De préférence, les symboles Z₃ et Z₄ sont chacun un atome d'hydrogène. Selon un mode de réalisation préférentiel de l'invention, les symboles Z₃ et Z₄ sont chacun un atome d'hydrogène et le symbole Z₁ désigne un atome d'hydrogène ou un alkyle.

Lorsque le symbole Z₁ représente un groupe alkyle, le groupe alkyle est préférentiellement un alkyle en C₁-C₆, plus préférentiellement un méthyle. On entend par alkyle en C₁-C₆ un alkyle qui contient de 1 à 6 atomes de carbone.

Autrement dit, l'élastomère fonctionnel est, selon ce mode de réalisation particulièrement préférentiel de l'invention, un polyisoprène modifié qui est obtenu par modification d'un polyisoprène de départ par une réaction de greffage de l'agent de modification. Le polyisoprène de départ est un polyisoprène à fort taux de cis, typiquement un polyisoprène contenant plus de 90% en mole de liaison 1,4-cis. De préférence, l'élastomère fonctionnel est obtenu par modification d'un caoutchouc naturel. De préférence le caoutchouc naturel utilisé comme polyisoprène de départ est différent d'un caoutchouc naturel époxydé.

De préférence, l'agent de modification est un composé 1,3-dipolaire. Le terme composé 1,3-dipolaire est compris selon la définition donnée par IUPAC. Il a pour caractéristique de comprendre un dipôle et un groupe de formule (II). Le dipôle constitue le groupe réactif de l'agent de modification vis-à-vis de doubles liaisons carbone carbone. Le dipôle réagit typiquement avec les doubles liaisons carbone carbone des unités isoprène du polyisoprène de départ par réaction de cycloaddition [2+3]. La mise en présence du polyisoprène de départ et de l'agent de modification conduit à la modification d'une partie des unités isoprène du polyisoprène de départ. Le composé 1,3-dipolaire utile aux besoins de l'invention est de préférence un monooxyde de nitrile aromatique. On entend par composé monooxyde de nitrile aromatique un composé aromatique qui contient un cycle aromatique, préférentiellement un noyau benzénique, et qui contient un seul dipôle oxyde de nitrile, lequel cycle aromatique est substitué par le dipôle oxyde de nitrile. Il s'en suit que l'atome de carbone du dipôle est lié directement par une liaison covalente à un atome de carbone du cycle aromatique. Avantageusement, le cycle aromatique est substitué en ortho du dipôle.

Avantageusement, le composé 1,3-dipolaire contient un motif de formule (III) dans laquelle quatre des six symboles R₁ à R₆, identiques ou différents, sont chacun un atome ou un groupe d'atomes, sachant que le cinquième symbole représente un rattachement au groupe de formule (II) et le sixième symbole un rattachement direct au dipôle.

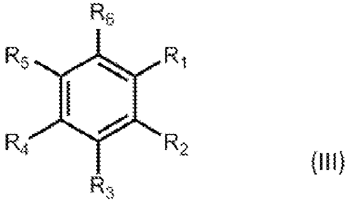

Dans la formule (III), les symboles R₁ et R₅ sont de préférence tous les deux différents d'un atome d'hydrogène, ce qui permet de conférer une plus grande stabilité du composé 1,3-dipolaire et ainsi une utilisation plus aisée du composé 1,3-dipolaire.

Dans la formule (III), les symboles R₁, R₃ et R₅ représentent chacun de préférence un groupe hydrocarboné, de manière plus préférentielle alkyle, de manière encore plus préférentielle méthyle ou éthyle.

Dans la formule (III), les symboles R₂ et R₄ sont préférentiellement chacun un atome d'hydrogène.

Dans la formule (III), les symboles R₁, R₃ et R₅ représentent chacun de préférence un groupe hydrocarboné, de manière plus préférentielle alkyle, de manière encore plus préférentielle méthyle ou éthyle et les symboles R₂ et R₄ sont préférentiellement chacun un atome d'hydrogène. Avec un cycle aromatique ainsi substitué, la synthèse du composé 1,3-dipolaire peut alors être réalisée à partir d'une voie de synthèse relativement aisée à partir d'un précurseur commercialement disponible, par exemple le mésitylène, comme cela est décrit notamment dans le document WO 2015059269.

Dans la formule (III), le cinquième symbole est rattaché au groupe de formule (II) de préférence par l'intermédiaire d'un groupe d'atomes dit espaceur. L'espaceur est de préférence une chaîne carbonée pouvant contenir au moins un hétéroatome. L'espaceur contient de préférence 1 à 6 atomes de carbone, en particulier 1 à 3 atomes de carbone. L'espaceur est plus préférentiellement un groupe alcanediyle, mieux méthanediyle.

Selon l'un quelconque des modes de réalisation de l'invention, le composé 1,3-dipolaire est avantageusement le composé 2,4,6-triméthyl-3-((2-méthyl-1*H*-imidazol-1-yl)méthyl)benzo-nitrile oxyde de formule (III-a) ou le composé 2,4,6-triéthyl-3-((2-méthyl-1*H*-imidazol-1-yl)méthyl)benzo-nitrile oxyde de formule (III-b), plus avantageusement le composé de formule (III-a).

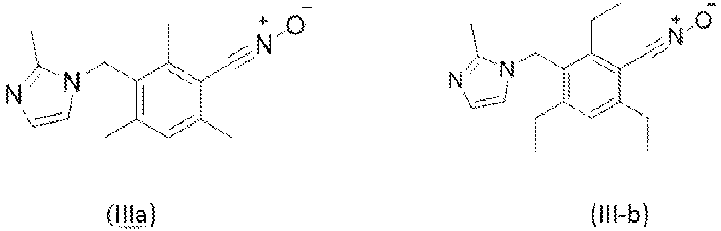

Le greffage de l'agent de modification sur le polyisoprène de départ peut être réalisé en masse, par exemple dans un mélangeur interne ou un mélangeur externe tel qu'un mélangeur à cylindres. Le greffage est alors mis en oeuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur.

Le procédé de greffage peut également être effectué en solution. La température à laquelle est mené le greffage est facilement ajustée par l'homme du métier à partir de ses connaissances générales en tenant compte de la concentration du milieu réactionnel, de la température de reflux du solvant, de la stabilité thermique du polymère et de l'agent de modification. Par exemple peut convenir une température aux alentours de 60°C. Le polymère ainsi modifié peut être séparé de sa solution par tout type de moyen connu par l'homme de l'art et en particulier par une opération d'évaporation du solvant sous pression réduite ou par une opération de stripping à la vapeur d'eau.

Avantageusement l'élastomère fonctionnel est préparé par un malaxage thermo-mécanique du polyisoprène de départ ayant une teneur molaire en unité 1,4-cis supérieure ou égale à 90%, préférentiellement supérieure ou égale à 95%, en présence de l'agent de modification.

Une autre caractéristique de la composition de caoutchouc est de contenir une charge renforçante. Le taux total de charge renforçante dans la composition de caoutchouc est préférentiellement de 30 à 80 pce, plus préférentiellement de 40 à 70 pce.

La charge renforçante utile aux besoins de l'invention comprend une silice. La silice représente plus de 50% en masse de la charge renforçante. De manière préférentielle, la silice représente plus de 90% en masse de la charge renforçante. La silice peut être un mélange de silices.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge renforçante peut comprendre tout type de charge dite renforçante autre que la silice, connue pour ses capacités à renforcer une composition de caoutchouc utilisable notamment pour la fabrication de pneumatiques, par exemple un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés.

De préférence, le noir de carbone est utilisé à un taux inférieur ou égal à 20 pce, plus préférentiellement inférieur ou égal à 10 pce (par exemple le taux de noir de carbone peut être compris dans un domaine allant de 0,5 à 20 pce, notamment allant de 1 à 10 pce).

Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

Pour coupler la silice à l'élastomère diénique, il est bien connu d'utiliser un agent de couplage (ou agent de liaison) au moins bifonctionnel destiné à assurer une connexion suffisante, de nature chimique et/ou physique, entre la silice (surface de ses particules) et l'élastomère, auquel cas la composition de caoutchouc comprend un agent de couplage pour lier la silice à l'élastomère. L'agent de couplage est un silane. On utilise en particulier des organosilanes ou des polyorganosiloxanes au moins bifonctionnels. Par « bifonctionnel », on entend un composé possédant un premier groupe fonctionnel capable d'interagir avec la silice et un second groupe fonctionnel capable d'interagir avec l'élastomère.

On utilise notamment des silanes polysulfurés, dits « symétriques » ou « asymétriques » selon leur structure particulière, tels que décrits par exemple dans les demandes WO03/002648-A1 (ou US2005/016651-A1) et WO03/002649-A1 (ou US2005/016650-A1). Conviennent en particulier, sans que la définition ci-après soit limitative, des silanes polysulfurés répondant à la formule générale (IV) suivante :

Z-A-Sₓ-A-Z (IV)

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en un alkylène en C₁-C₄, en particulier le propylène) ;
- les symboles Z, identiques ou différents, répondent à l'une des trois formules ci-après : 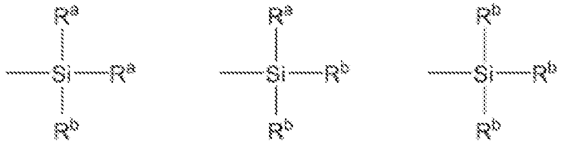 dans lesquelles :
- les radicaux R^{a}, substitués ou non substitués, identiques ou différents entre eux, représentent un groupe alkyle en C₁-C₁₈, un groupe cycloalkyle en C₅-C₁₈ ou un groupe aryle en C₆-C₁₈ (de préférence des groupes alkyle en C₁-C₆, le cyclohexyle ou le phényle, notamment des groupes alkyle en C₁-C₄, plus particulièrement le méthyle et/ou l'éthyle).
- les radicaux R^{b}, substitués ou non substitués, identiques ou différents entre eux, représentent un groupe alkoxyle en C₁-C₁₈ ou un groupe cycloalkoxyle en C₅-C₁₈ (de préférence un groupe choisi parmi les alkoxyles en C₁-C₈ et les cycloalkoxyles en C₅-C₈, plus préférentiellement encore un groupe choisi parmi les alkoxyles en C₁-C₄, en particulier le méthoxyle et l'éthoxyle), ou un groupe hydroxyle, ou tel que 2 radicaux R^{b} représentent un groupe dialkoxyle en C₃-C₁₈.

Dans le cas d'un mélange d'alkoxysilanes polysulfurés répondant à la formule (IV) ci-dessus, notamment des mélanges usuels disponibles commercialement, la valeur moyenne des « x » est un nombre fractionnaire de préférence compris dans un domaine allant de 2 à 5, plus préférentiellement proche de 4.

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ commercialisé sous la dénomination « Si69 » par la société Evonik ou le disulfure de bis-(triéthoxysilylpropyle), en abrégé TESPD, de formule [(C₂H₅O)₃Si(CH₂)₃S]₂ commercialisé sous la dénomination « Si75 » par la société Evonik. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyle), plus particulièrement le tétrasulfure de bis-monoéthoxydiméthylsilylpropyle tel que décrit dans la demande de brevet WO02/083782-A1 précitée (ou US7217751-B2).

Bien entendu pourraient être également utilisés des mélanges des agents de couplage, en particulier ceux précédemment décrits.

La composition de caoutchouc peut comporter également tout ou partie des additifs usuels habituellement utilisés dans les compositions. La composition de caoutchouc peut notamment comporter un élastomère autre que l'élastomère fonctionnel. De préférence, cet autre élastomère peut être un élastomère non modifié, par exemple l'élastomère de départ utilisé dans la préparation de l'élastomère fonctionnel. De manière plus préférentielle, le taux de l'élastomère fonctionnel dans la composition de caoutchouc conforme à l'invention est préférentiellement d'au moins 50 pce, plus préférentiellement d'au moins 75 pce, encore plus préférentiellement d'au moins 90 pce.

Le taux d'élastomère fonctionnel dans la composition de caoutchouc varie donc préférentiellement de 50 à 100 pce, plus préférentiellement de 75 à 100 pce, encore plus préférentiellement de 90 à 100 pce. Ces taux préférentiels d'élastomère fonctionnel dans la composition de caoutchouc peuvent s'appliquer à l'un quelconque des modes de réalisation de l'invention.

La composition de caoutchouc contient un système de vulcanisation conventionnellement utilisé dans les compositions de caoutchouc utilisables pour la fabrication de pneumatique. De manière connue, le système de vulcanisation est un système à base de soufre (ou d'un agent donneur de soufre) et d'un accélérateur primaire de vulcanisation.

Dans les compositions de caoutchouc destinées à être mises en contact avec au moins un élément de renforcement métallique dont la surface est laitonnée, une partie du soufre est consommée dans la formation d'une interface d'accrochage entre la composition de caoutchouc et le métal. Aussi, le soufre est-il présent dans de telles compositions de caoutchouc destinées à la préparation de composites ou couches adjacentes à ces composites, dans des proportions supérieures à celles habituellement utilisées dans d'autres compositions, par exemple pour bandes de roulement. Le soufre est utilisé à un taux de plus de 5 pce. Préférentiellement, le taux de soufre dans la composition de caoutchouc est supérieur à 5 pce et inférieur ou égal à 10 pce.

Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation de l'élastomère ou de la sulfuration du laiton.

On peut utiliser comme accélérateur de vulcanisation primaire des accélérateurs du type thiazoles ainsi que leurs dérivés, des accélérateurs de types sulfénamides pour ce qui est des accélérateurs primaires. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire de vulcanisation est utilisé à un taux préférentiel compris entre 0,5 et 10 pce.

A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique, la diphénylguanidine, ou retardateurs de vulcanisation.

La composition de caoutchouc peut contenir en outre d'autres additifs connus pour être utilisés dans des compositions de caoutchouc pour pneumatiques, tels que des pigments, des agents de mise en oeuvre, des anti-ozonants, des antioxydants, des systèmes promoteurs d'adhésion vis-à-vis de renforts métalliques notamment laitonnés, comme par exemple des sels métalliques tels que des sels organiques de cobalt ou de nickel. L'homme du métier saura ajuster la formulation de la composition en fonction de ses besoins particuliers.

De préférence, la composition de caoutchouc comporte en outre au moins un promoteur d'adhésion, tel qu'un sel organique de cobalt ou de nickel. Son taux dans la composition de caoutchouc est préférentiellement compris entre 0.1 et 10 pce, plus préférentiellement entre 0.3 et 6 pce, en particulier entre 0.5 et 4 pce.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc peut être fabriquée selon un procédé qui comprend les étapes suivantes :
- au cours d'une première étape dite non productive ajouter un polyisoprène de départ ayant une teneur molaire en unité 1,4-cis supérieure à 90%, et un agent de modification en malaxant thermo-mécaniquement, l'agent de modification contenant un groupe réactif vis-à-vis des doubles liaisons carbone carbone du polyisoprène de départ et un groupe de formule (II) tel que défini précédemment,
- ajouter ensuite la charge renforçante, le cas échéant les autres ingrédients de la composition de caoutchouc à l'exception du système de vulcanisation en malaxant thermo-mécaniquement jusqu'à atteindre une température maximale comprise entre 130 et 200°C,
- refroidir l'ensemble à une température inférieure à 100°C,
- incorporer ensuite le système de vulcanisation,
- malaxer le tout jusqu'à une température maximale inférieure à 120°C.

La composition finale ainsi obtenue est généralement calandrée pour former le mélange de calandrage destiné à enrober des éléments de renforcement pour constituer l'armature de renforcement, autre objet de l'invention.

Les éléments de renforcement, également dénommés renforts, sont métalliques. Les renforts métalliques sont de préférence des renforts en acier, en particulier en acier perlitique (ou ferrito-perlitique) au carbone dénommé de manière connue "acier au carbone", ou encore en acier inoxydable tels que décrits par exemple dans les demandes de brevet EP-A-648 891 ou WO98/41682. Mais il est bien entendu possible d'utiliser d'autres aciers ou d'autres alliages. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer. Dans la présente invention, les pourcentages relatifs à la teneur des éléments métalliques dans l'acier sont des pourcentages massiques.

Les renforts utilisés sont de préférence des assemblages (torons ou câbles) de fils fins en acier au carbone ou en acier inoxydable ayant :
- une résistance en traction supérieure à 2000 MPa, plus préférentiellement supérieure à 2500 MPa, en particulier supérieure à 3000 MPa ; l'homme du métier sait comment fabriquer des fils fins présentant une telle résistance, en ajustant notamment la composition de l'acier et les taux d'écrouissage final de ces fils ;
- pour un bon compromis résistance/tenue en flexion/faisabilité, un diamètre compris entre 0.10 et 0.40 mm, plus préférentiellement entre 0.10 et 0.30 mm environ lorsque l'armature de renforcement est une armature de carcasse, entre 0.20 et 0.40 mm environ lorsque l'armature de renforcement est une armature de sommet.

Par « fil », on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm. Par « film » ou « ruban », on entend de manière générale un élément longiligne, de grande longueur relativement à sa section transversale, dont la section transversale présente un rapport de forme (largeur sur épaisseur) supérieur à 5, de préférence supérieur à 10, et dont la largeur est préférentiellement au moins égale à 3 mm, plus préférentiellement au moins égale à 5 mm.

De préférence, les éléments de renforcement métalliques sont recouverts de laiton.

L'armature de renforcement peut être fabriquée selon un procédé qui comprend les étapes suivantes :
- réaliser deux couches de la composition de caoutchouc conforme à l'invention,
- prendre chaque élément de renforcement en sandwich dans les deux couches en le déposant entre les deux couches.

L'armature de renforcement selon l'invention est à l'état cru (avant réticulation de l'élastomère) ou à l'état cuit (après réticulation de l'élastomère). L'armature de renforcement est de préférence une armature de renforcement pour pneumatique, en particulier une armature de sommet pour pneumatique ou une armature de carcasse pour pneumatique.

Le pneumatique, autre objet de l'invention, qui comprend une composition de caoutchouc conforme à l'invention, de préférence dans une armature de renforcement, est à l'état cru ou à l'état cuit.

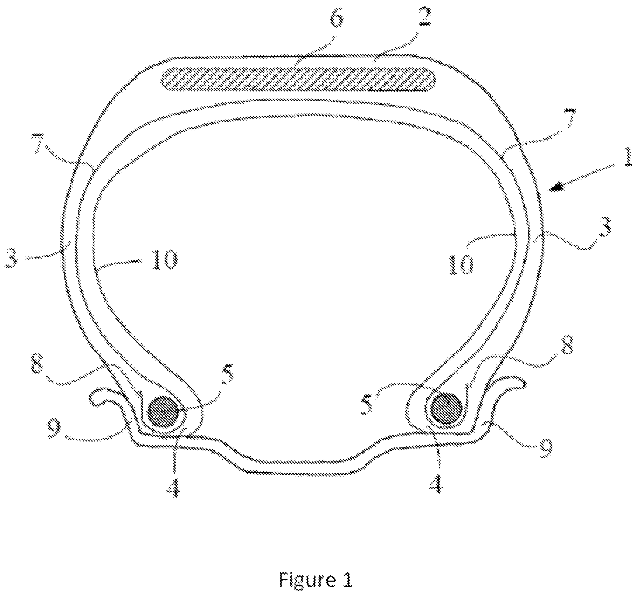

A titre d'exemple, la figure 1 représente de manière schématique une coupe radiale d'un pneumatique 1 à armature de carcasse radiale conforme à l'invention. Le pneumatique 1 comporte un sommet 2, deux flancs 3, deux bourrelets 4, une armature de carcasse 7 s'étendant d'un bourrelet à l'autre. Le sommet 2, surmonté d'une bande de roulement (non représentée sur cette figure schématique, pour simplification), est de manière connue en soi renforcé par une armature de sommet 6 constituée par exemple d'au moins deux nappes sommet croisées superposées (nappes sommet dites "de travail"). L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Bien entendu, ce pneumatique 1 comporte en outre de manière connue une couche de gomme ou élastomère 10, communément appelée gomme ou couche d'étanchéité, qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renforcement (non représentée sur la figure) qui est située entre la nappe de carcasse et la couche d'étanchéité.

En résumé, l'invention est mise en oeuvre avantageusement selon l'un quelconque des modes de réalisation suivants 1 à 22 :
Mode 1 : Composition de caoutchouc qui comprend un élastomère fonctionnel, une charge renforçante et un système de vulcanisation qui comprend plus de 5 pce de soufre, l'élastomère fonctionnel étant un polyisoprène qui comprend des unités isoprène sous la configuration 1,4-cis et des groupes pendants imidazole de formule (I) 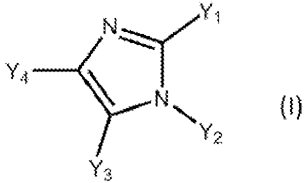 dans laquelle Y₁ désigne un atome d'hydrogène ou un alkyle, Y₂ désigne un rattachement à une unité isoprène de l'élastomère fonctionnel, Y₃ et Y₄, identiques ou différents, représentent un atome d'hydrogène, un alkyle ou forment ensemble avec les atomes de carbone auxquels ils se rattachent un cycle, les unités isoprène sous la configuration 1,4-cis représentant au moins 90% en mole des unités isoprène de l'élastomère fonctionnel,
   la charge renforçante comprenant plus de 50% en masse d'une silice.
Mode 2 : Composition de caoutchouc selon le mode 1 dans laquelle l'élastomère fonctionnel contient plus de 0% à 3% en mole de groupes pendants imidazole.
Mode 3 : Composition de caoutchouc selon l'un quelconque des modes 1 à 2 dans laquelle Y₃ et Y₄ sont chacun un atome d'hydrogène.
Mode 4 : Composition de caoutchouc selon l'un quelconque des modes 1 à 3 dans laquelle le groupe alkyle représenté par Y₁ contient de 1 à 6 atomes de carbone, de préférence le groupe alkyle est méthyle.
Mode 5 : Composition de caoutchouc selon l'un quelconque des modes 1 à 4 dans laquelle le polyisoprène est un caoutchouc naturel.
Mode 6 : Composition de caoutchouc selon l'un quelconque des modes 1 à 5 dans laquelle le polyisoprène est différent d'un caoutchouc naturel époxydé.
Mode 7 : Composition de caoutchouc selon l'un quelconque des modes 1 à 6 dans laquelle la silice représente plus de 90% en masse de la charge renforçante.
Mode 8 : Composition de caoutchouc selon l'un quelconque des modes 1 à 7 dans laquelle le taux total de charge renforçante est de 30 à 80 pce, préférentiellement de 40 à 70 pce, parties en poids pour cent parties d'élastomère.
Mode 9 : Composition de caoutchouc selon l'un quelconque des modes 1 à 8, laquelle composition de caoutchouc contient un promoteur d'adhésion, tel qu'un sel organique de cobalt ou de nickel.
Mode 10 : Composition de caoutchouc selon l'un quelconque des modes 1 à 9 dans laquelle le taux de soufre est supérieur à 5 pce et inférieur ou égal à 10 pce.
Mode 11 : Composition de caoutchouc selon l'un quelconque des modes 1 à 10 laquelle composition contient un agent de couplage pour lier la silice à l'élastomère fonctionnel, de préférence un silane.
Mode 12 : Composition de caoutchouc selon l'un quelconque des modes 1 à 11 dans laquelle l'élastomère fonctionnel est un élastomère diénique dont une partie des unités diéniques sont modifiées par greffage d'un agent de modification qui contient un groupe réactif vis-à-vis de doubles liaisons carbone carbone et un groupe de formule (II) dans laquelle le symboles Z₁ désigne un atome d'hydrogène ou un alkyle, Z₂ désigne un rattachement à une unité isoprène de l'élastomère fonctionnel, Z₃ et Z₄, identiques ou différents, représentent un atome d'hydrogène, un alkyle ou forment ensemble avec les atomes de carbone auxquels ils se rattachent un cycle. 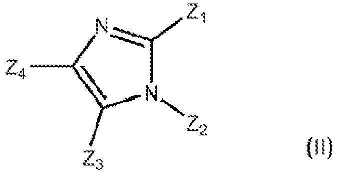
Mode 13 : Composition de caoutchouc selon le mode 12 dans laquelle l'agent de modification est un composé 1,3-dipolaire.
Mode 14 : Composition de caoutchouc selon l'un quelconque des modes 12 à 13 dans laquelle l'agent de modification est un monooxyde de nitrile aromatique.
Mode 15 : Composition de caoutchouc selon l'un quelconque des modes 12 à 14 dans laquelle le composé 1,3-dipolaire contient un motif de formule (III) dans laquelle quatre des six symboles R₁ à R₆, identiques ou différents, sont chacun un atome ou un groupe d'atomes, sachant que le cinquième symbole représente un rattachement au groupe de formule (II) et le sixième symbole un rattachement direct au dipôle. 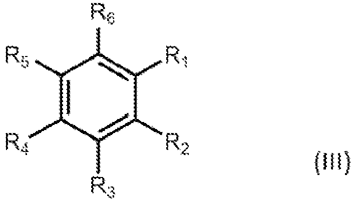
Mode 16 : Composition de caoutchouc selon le mode 15 dans laquelle les symboles R₁, R₃ et R₅ représentent chacun un groupe hydrocarboné, de préférence alkyle, de manière plus préférentielle méthyle ou éthyle.
Mode 17 : Composition de caoutchouc selon l'un quelconque des modes 15 à 16 dans laquelle les symboles R₂ et R₄ sont préférentiellement chacun un atome d'hydrogène.
Mode 18 : Composition de caoutchouc selon l'un quelconque des modes 15 à 17 dans laquelle le cinquième symbole est rattaché au groupe de formule (II) par l'intermédiaire d'un alcanediyle, préférentiellement méthanediyle.
Mode 19 : Armature de renforcement comportant un mélange de calandrage et des éléments de renforcement métalliques enrobés dans le mélange de calandrage, lequel mélange de calandrage est une composition de caoutchouc définie à l'un quelconque des modes 1 à 18.
Mode 20 : Armature de renforcement selon le mode 19 dans laquelle les éléments de renforcement métalliques sont recouverts de laiton.
Mode 21 : Armature de renforcement selon l'un quelconque des modes 19 à 20, laquelle armature de renforcement est une armature de renforcement pour pneumatique, en particulier une armature de sommet pour pneumatique ou une armature de carcasse pour pneumatique.
Mode 22 : Pneumatique comprenant une composition de caoutchouc définie à l'un quelconque des modes 1 à 18 ou une armature de renforcement définie à l'une quelconque des modes 19 à 21.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemple

### 1- Préparation des élastomères fonctionnels et des compositions de caoutchouc :

Les compositions de caoutchouc C1 à C6 sont préparées. Leur formulation est donnée dans le tableau 1.

Dans le cas des compositions de caoutchouc C1, C2, C4 et C5, on procède, pour la fabrication de ces compositions, de la manière suivante : on introduit dans un mélangeur interne (taux de remplissage final : environ 70% en volume), dont la température initiale de cuve est d'environ 110°C, le polyisoprène, puis la charge renforçante, ainsi que les divers autres ingrédients à l'exception du système de vulcanisation. On conduit alors un travail thermomécanique (phase non-productive) en une étape, qui dure environ 5 à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques ou pour être utilisées comme armature de renforcement pour pneumatique.

Dans le cas des compositions de caoutchouc C3 et C6, on procède comme mentionné pour la composition C1 si ce n'est qu'avant d'introduire la charge renforçante, on introduit le composé 1,3-dipolaire qui est malaxé seul avec le polyisoprène pendant 1 à 2 minutes à 110°C, ce qui permet de fonctionnaliser le polyisoprène avec des groupes pendants de formule (I) avant d'introduire les autres ingrédients de la composition de caoutchouc. Le taux de composé 1,3-dipolaire introduit dans le mélangeur interne pour fonctionnaliser le polyisoprène avant l'introduction des autres ingrédients de la composition de caoutchouc est de 1.3 pce, ce qui correspond à un taux molaire de modification de plus de 0% à au plus 3%.

Les compositions C3 et C6 sont des compositions conformes à l'invention, puisque elles contiennent, à la différence des autres compositions, un élastomère fonctionnel imidazole. Les compositions C1 à C3 sont toutes à base de caoutchouc naturel, fonctionnel imidazole dans C3, non fonctionnel dans C1 et C2. La composition C1 avec 1.5 pce de diphénylguanidine (DPG) est une composition témoin des autres compositions C2 et C3. La composition C2 qui contient une teneur en DPG plus élevée (2.8 pce) est une composition comparative. La composition C3 contient aussi une teneur de DPG aussi faible que celle de C1. Les compositions C4 à C6 sont toutes à base de polyisoprène de synthèse, fonctionnel imidazole dans C6, non fonctionnel dans C4 et C5. La composition C4 avec 1.5 pce de DPG est une composition témoin des autres compositions C5 et C6. La composition C5 qui contient une teneur en DPG plus élevée (2.8 pce) est une composition comparative. La composition C6 contient aussi une teneur de DPG aussi faible que celle de C4.

### 2- Propriétés d'adhésion renfort-composition :

La qualité de la liaison entre le mélange de calandrage et les renforts métalliques est déterminée par un test dans lequel on mesure la force nécessaire pour extraire des tronçons de renfort métallique du mélange de calandrage vulcanisé. A cette fin, on prépare des éprouvettes contenant d'une part des assemblages métalliques à titre de renfort métallique et d'autre part un mélange de calandrage vulcanisé. Chaque renfort métallique est constitué de 9 fils d'acier à 0,7% de carbone, de 35/100è millimètres de diamètre retordus ensemble, le revêtement en laiton comprend 63% de cuivre.

Les compositions de caoutchouc préparées sont utilisées pour confectionner des éprouvettes selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les renforts métalliques sont emprisonnés entre les deux plaques à l'état cru, à égale distance et en laissant dépasser de part et d'autre de ces plaques une extrémité du renfort métallique de longueur suffisante pour la traction ultérieure. Le bloc comportant les renforts métalliques est alors placé dans un moule adapté aux conditions de tests visées et laissées à l'initiative de l'homme de l'art ; à titre d'exemple, dans le cas présent, la cuisson du bloc est réalisée à 140°C pendant 50 min sous pression de 5.5 tonnes. Les fils unitaires sont des fils en acier recouvert de laiton. Leur diamètre est de 1.35 mm ; l'épaisseur du revêtement en laiton de 200 nm à 1 µm.

A l'issue de la cuisson, l'éprouvette ainsi constituée du bloc réticulé et des renforts métalliques est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

### 3- Propriétés de vulcanisation :

Les mesures sont effectuées à 140°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction vulcanisation. Les mesures sont traitées selon la norme DIN 53529 - partie 2 (mars 1983). Ti est le délai d'induction, c'est-à-dire le temps nécessaire au début de la réaction de vulcanisation.

### 4-Propriétés hystérétiques :

Telle que décrite dans la norme DIN 53-512 d'avril 2000, la mesure de pertes, pertes hystérétiques, est une mesure de perte d'énergie à 60 °C par rebond à énergie imposée mesurée au sixième choc. La valeur, exprimée en %, est la différence entre l'énergie fournie et l'énergie restituée, rapportée à l'énergie fournie.

### 5- Détermination du taux de fonction des élastomères par résonance magnétique nucléaire RMN :

La microstructure est déterminée par RMN ¹H. Le taux molaire de composé oxyde de nitrile greffé est déterminé aussi par analyse RMN. Les échantillons sont solubilisés dans un mélange de disulfure de carbone et de benzène deutéré (CS₂/C₆D₆ (50/50)) dans le but d'obtenir un signal de « lock ». Les spectres sont acquis sur un spectromètre 500 MHz BRUKER équipé d'une « CryoSonde BBFO-zgrad-5 mm ». L'expérience RMN ¹H quantitative, utilise une séquence simple impulsion 30° et un délai de répétition de 5 secondes entre chaque acquisition. Des expériences RMN 2D ont permis de vérifier la nature du motif greffé grâce aux déplacements chimiques des atomes de carbone et de proton.

### 6- Résultats :

Les résultats figurent dans le tableau 2. Ils sont exprimés en base 100 par rapport à une composition témoin. Une valeur supérieure à celle du témoin, arbitrairement fixée à 100, indique une grandeur mesurée supérieure à celle du témoin.

La comparaison des compositions C1 et C2 d'une part et la comparaison des compositions C4 et C5 d'autre part montrent qu'une augmentation du taux de diphénylguanidine s'accompagne certes d'une diminution des pertes, mais d'une très forte diminution du temps d'induction et d'une forte diminution des forces d'adhésion. Comparativement à leurs compositions témoin et comparative respectives, les compositions C3 et C6 donnent le meilleur compromis entre les propriétés de vulcanisation, de pertes et d'adhésion.

En résumé, les compositions de caoutchouc conformes à l'invention donnent le meilleur compromis entre la performance industrielle dans la fabrication d'un pneumatique et l'endurance du pneumatique. Du point de vue de la pérennité des performances, vues au travers des propriétés d'adhésion et des pertes, les meilleurs résultats sont obtenus lorsque l'élastomère fonctionnel dérive d'un caoutchouc naturel.

**Tableau 1**

| **Composition** | **C1** | **C2** | **C3** | **C4** | **C5** | **C6** |
|---|---|---|---|---|---|---|
| Polyisoprène (1) | 100 | 100 | | | | |
| Polyisoprène (2) | | | | 100 | 100 | |
| Polyisoprène fonctionnel (3) | | | 100 | | | |
| Polyisoprène fonctionnel (4) | | | | | | 100 |
| Silice (5) | 55 | 55 | 55 | 55 | 55 | 55 |
| Silane (6) | 9 | 9 | 9 | 9 | 9 | 9 |
| DPG (7) | 1,5 | 2,8 | 1,5 | 1,5 | 2,8 | 1,5 |
| 6PPD (8) | 2 | 2 | 2 | 2 | 2 | 2 |
| Acide stéarique | 1 | 1 | 1 | 1 | 1 | 1 |
| ZnO | 8 | 8 | 8 | 8 | 8 | 8 |
| Sel de Cobalt | 1 | 1 | 1 | 1 | 1 | 1 |
| CTP (9) | 0,2 | 0,2 | 0,2 | 0,2 | 0,2 | 0,2 |
| TBBS (10) | 1 | 1 | 1 | 1 | 1 | 1 |
| Soufre | 6 | 6 | 6 | 6 | 6 | 6 |

| | | | | | | |
|---|---|---|---|---|---|---|
| (1) Caoutchouc naturel ; (2) Polyisoprène de synthèse à 95% de liaison 1,4-cis ; (3) Caoutchouc naturel modifié selon le mode opératoire décrit dans le paragraphe 1 ; (4) Polyisoprène de synthèse à 95% de liaison 1,4-cis modifié selon le mode opératoire décrit dans le paragraphe 1 ; (5) « Zeosil 1165MP » de la société Rhodia ; (6) Agent de couplage TESPT (« X50S » de la société Orion) ; (7) Diphénylguanidine (« Perkacit » DPG de la société Flexsys) ; (8) N-(1,3-diméthylbutyl)-N'-phényl-p-phénylènediamine (Santoflex 6-PPD) de la société Flexsys ; (9) N-(cyclohexylthio)phtalimide; commercialisé sous la dénomination « Vulkalent G » par la société Lanxess ou aussi « Duslin P » par la société Duslo ; (10) N-tert-butyl-2-benzothiazol-sulfénamide (Santocure TBBS de la société Flexsys). | | | | | | |

**Tableau 2**

| **Composition** | **C1** | **C2** | **C3** | **C4** | **C5** | **C6** |
|---|---|---|---|---|---|---|
| Ti (min) | 100 | 50 | 77 | 100 | 57 | 100 |
| Perte 60°C | 100 | 93 | 61 | 100 | 82 | 44 |
| Adhésion | 100 | 75 | 103 | 100 | 83 | 95 |

## Revendications

1. Composition de caoutchouc qui comprend un élastomère fonctionnel, une charge renforçante et un système de vulcanisation qui comprend plus de 5 pce de soufre, l'élastomère fonctionnel étant un polyisoprène qui comprend des unités isoprène sous la configuration 1,4-cis et des groupes pendants imidazole de formule (I) 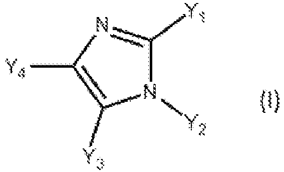
dans laquelle Y₁ désigne un atome d'hydrogène ou un alkyle, Y₂ désigne un rattachement à une unité isoprène de l'élastomère fonctionnel, Y₃ et Y₄, identiques ou différents, représentent un atome d'hydrogène, un alkyle ou forment ensemble avec les atomes de carbone auxquels ils se rattachent un cycle, les unités isoprène sous la configuration 1,4-cis représentant au moins 90% en mole des unités isoprène de l'élastomère fonctionnel,
la charge renforçante comprenant plus de 50% en masse d'une silice.

2. Composition de caoutchouc selon la revendication 1 dans laquelle l'élastomère fonctionnel contient plus de 0% à 3% en mole de groupes pendants imidazole.

3. Composition de caoutchouc selon l'une quelconque des revendications 1 à 2 dans laquelle Y₃ et Y₄ sont chacun un atome d'hydrogène.

4. Composition de caoutchouc selon l'une quelconque des revendications 1 à 3 dans laquelle le groupe alkyle représenté par Y₁ contient de 1 à 6 atomes de carbone, de préférence le groupe alkyle est méthyle.

5. Composition de caoutchouc selon l'une quelconque des revendications 1 à 4 dans laquelle le polyisoprène est un caoutchouc naturel.

6. Composition de caoutchouc selon l'une quelconque des revendications 1 à 5 dans laquelle le polyisoprène est différent d'un caoutchouc naturel époxydé.

7. Composition de caoutchouc selon l'une quelconque des revendications 1 à 6 dans laquelle la silice représente plus de 90% en masse de la charge renforçante.

8. Composition de caoutchouc selon l'une quelconque des revendications 1 à 7 dans laquelle le taux total de charge renforçante est de 30 à 80 pce, préférentiellement de 40 à 70 pce, parties en poids pour cent parties d'élastomère.

9. Composition de caoutchouc selon l'une quelconque des revendications 1 à 8, laquelle composition de caoutchouc contient un promoteur d'adhésion.

10. Composition de caoutchouc selon l'une quelconque des revendications 1 à 9 dans laquelle le taux de soufre est supérieur à 5 pce et inférieur ou égal à 10 pce.

11. Armature de renforcement comportant un mélange de calandrage et des éléments de renforcement métalliques enrobés dans le mélange de calandrage, lequel mélange de calandrage est une composition de caoutchouc définie à l'une quelconque des revendications 1 à 10.

12. Armature de renforcement selon la revendication 11 dans laquelle les éléments de renforcement métalliques sont recouverts de laiton.

13. Armature de renforcement selon l'une quelconque des revendications 11 à 12, laquelle armature de renforcement est une armature de renforcement pour pneumatique, en particulier une armature de sommet pour pneumatique ou une armature de carcasse pour pneumatique.

14. Pneumatique comprenant une composition de caoutchouc définie à l'une quelconque des revendications 1 à 10 ou une armature de renforcement définie à l'une quelconque des revendications 11 à 13.

## Patentansprüche

1. Kautschukzusammensetzung, die ein funktionelles Elastomer, einen verstärkenden Füllstoff und ein Vulkanisationssystem, das mehr als 5 phe Schwefel umfasst, umfasst,
wobei es sich bei dem funktionellen Elastomer um ein Polyisopren handelt, das Isopren-Einheiten in der cis-1,4-Konfiguration und seitenständige Imidazolgruppen der Formel (I) 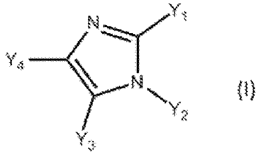
umfasst, wobei Y₁ für ein Wasserstoffatom oder ein Alkyl steht, Y₂ für eine Anbindung an eine Isopren-Einheit des funktionellen Elastomers steht, Y₃ und Y₄, die gleich oder verschieden sind, für ein Wasserstoffatom oder ein Alkyl stehen oder zusammen mit den Kohlenstoffatomen, an die sie gebunden sind, einen Ring bilden, wobei die Isopren-Einheiten in der cis-1,4-Konfiguration mindestens 90 Mol-% der Isopren-Einheiten des funktionellen Elastomers ausmachen,
wobei der verstärkende Füllstoff mehr als 50 Massen- % einer Kieselsäure umfasst.

2. Kautschukzusammensetzung nach Anspruch 1, wobei das funktionelle Elastomer mehr als 0 bis 3 Mol-% seitenständige Imidazolgruppen enthält.

3. Kautschukzusammensetzung nach einem der Ansprüche 1 bis 2, wobei Y₃ und Y₄ jeweils ein Wasserstoffatom sind.

4. Kautschukzusammensetzung nach einem der Ansprüche 1 bis 3, wobei die durch Y₁ dargestellte Alkylgruppe 1 bis 6 Kohlenstoffatome enthält, wobei es sich bei der Alkylgruppe vorzugsweise um Methyl handelt.

5. Kautschukzusammensetzung nach einem der Ansprüche 1 bis 4, wobei es sich bei dem Polyisopren um einen Naturkautschuk handelt.

6. Kautschukzusammensetzung nach einem der Ansprüche 1 bis 5, wobei das Polyisopren von einem epoxidierten Naturkautschuk verschieden ist.

7. Kautschukzusammensetzung nach einem der Ansprüche 1 bis 6, wobei die Kieselsäure mehr als 90 Massen-% verstärkenden Füllstoff ausmacht.

8. Kautschukzusammensetzung nach einem der Ansprüche 1 bis 7, wobei der Gesamtgehalt an verstärkendem Füllstoff 30 bis 80 phe, vorzugsweise 40 bis 70 phe, Gewichtsteile pro hundert Teile Elastomer, beträgt.

9. Kautschukzusammensetzung nach einem der Ansprüche 1 bis 8, wobei die Kautschukzusammensetzung einen Haftvermittler umfasst.

10. Kautschukzusammensetzung nach einem der Ansprüche 1 bis 9, wobei der Gehalt an Schwefel größer als 5 phe und kleiner oder gleich 10 phe ist.

11. Verstärkungsbewehrung, umfassend eine Kalandermischung und metallische Verstärkungselemente, die mit der Kalandermischung umhüllt sind, wobei es sich bei der Kalandermischung um eine Kautschukzusammensetzung gemäß einem der Ansprüche 1 bis 10 handelt.

12. Verstärkungsbewehrung nach Anspruch 11, wobei die metallischen Verstärkungselemente mit Messing beschichtet sind.

13. Verstärkungsbewehrung nach einem der Ansprüche 11 bis 12, wobei es sich bei der Verstärkungsbewehrung um eine Verstärkungsbewehrung für einen Reifen, insbesondere eine Scheitelbewehrung für einen Reifen oder eine Karkassenbewehrung für einen Reifen handelt.

14. Reifen, umfassend eine Kautschukzusammensetzung gemäß einem der Ansprüche 1 bis 10 oder eine Verstärkungsbewehrung gemäß einem der Ansprüche 11 bis 13.

## Claims

1. Rubber composition which comprises a functional elastomer, a reinforcing filler and a vulcanization system which comprises more than 5 phr of sulfur,
the functional elastomer being a polyisoprene which comprises isoprene units in the cis-1,4 configuration and imidazole pendent groups of formula (I) 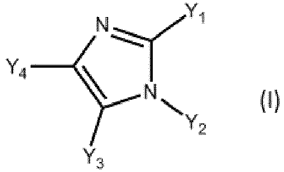
in which Y₁ denotes a hydrogen atom or an alkyl, Y₂ denotes an attachment to an isoprene unit of the functional elastomer, Y₃ and Y₄, which are identical or different, represent a hydrogen atom or an alkyl or, together with the carbon atoms to which they are attached, form a ring, the isoprene units in the cis-1,4 configuration representing at least 90 mol% of the isoprene units of the functional elastomer,
the reinforcing filler comprising more than 50% by weight of a silica.

2. Rubber composition according to Claim 1, in which the functional elastomer contains more than 0 mol% to 3 mol% of imidazole pendent groups.

3. Rubber composition according to any one of Claims 1 and 2, in which Y₃ and Y₄ are each a hydrogen atom.

4. Rubber composition according to any one of Claims 1 to 3, in which the alkyl group represented by Y₁ contains from 1 to 6 carbon atoms, the alkyl group preferably being methyl.

5. Rubber composition according to any one of Claims 1 to 4, in which the polyisoprene is a natural rubber.

6. Rubber composition according to any one of Claims 1 to 5, in which the polyisoprene is different from an epoxidized natural rubber.

7. Rubber composition according to any one of Claims 1 to 6, in which the silica represents more than 90% by weight of the reinforcing filler.

8. Rubber composition according to any one of Claims 1 to 7, in which the total content of reinforcing filler is from 30 to 80 phr, preferentially from 40 to 70 phr, parts by weight per hundred parts of elastomer.

9. Rubber composition according to any one of Claims 1 to 8, which rubber composition comprises an adhesion promoter.

10. Rubber composition according to any one of Claims 1 to 9, in which the sulfur content is greater than 5 phr and less than or equal to 10 phr.

11. Reinforcement comprising a calendering compound and metal reinforcing elements coated in the calendering compound, which calendering compound is a rubber composition defined in any one of the Claims 1 to 10.

12. Reinforcement according to Claim 11, in which the metal reinforcing elements are coated with brass.

13. Reinforcement according to either one of Claims 11 and 12, which reinforcement is a reinforcement for a tyre, in particular a crown reinforcement for a tyre or a carcass reinforcement for a tyre.

14. Tyre comprising a rubber composition defined in any one of Claims 1 to 10 or a reinforcement defined in any one of Claims 11 to 13.
